(19) Europäisches Patentamt
European Patent Office
Office européen des brevets

(11) **EP 4 103 996 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **20710416.7**

(22) Anmeldetag: **13.02.2020**

(51) Internationale Patentklassifikation (IPC):
*G02B 23/12* (2006.01) *G02B 27/00* (2006.01)

(52) Gemeinsame Patentklassifikation (CPC):
**G02B 23/12; G02B 27/0068**

(86) Internationale Anmeldenummer:
**PCT/DE2020/100103**

(87) Internationale Veröffentlichungsnummer:
**WO 2021/160195 (19.08.2021 Gazette 2021/33)**

(54) **DIGITALES FERNROHR**

DIGITAL TELESCOPE

TÉLESCOPE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2022 Patentblatt 2022/51**

(73) Patentinhaber: **Leica Camera AG**
**35578 Wetzlar (DE)**

(72) Erfinder: **KAMMANS, Sigrun**
**35745 Herborn (DE)**

(74) Vertreter: **Stamer, Jan**
**PATENTANWALTSKANZLEI STAMER**
**Postfach 2604**
**35536 Wetzlar (DE)**

(56) Entgegenhaltungen:
**US-A1- 2009 179 824 US-A1- 2016 112 646**

**Beschreibung**

Die Erfindung betrifft ein digitales Fernrohr mit den Merkmalen des Oberbegriffs des Anspruchs 1.

Aus der Druckschrift US 2016/0112646 A1 ist einen Fotoapparat mit Bildverarbeitungsverfahren zur Korrektur der Verzeichnung eines Zoom-Objektivs in Abhängigkeit von der Brennweite des Objektivs bekannt. Eine im Weitwinkelbereich bei kurzer Brennweite auftretende kissenförmige Verzeichnung und eine im Telefotobereich bei langer Brennweite auftretende tonnenförmige Verzeichnung werden anhand gespeicherter Korrekturparameter durch eine Recheneinheit korrigiert, so dass ein verzeichnungsfreies Bild unabhängig von der ZoomEinstellung entsteht.

US 2009/0179824 A1 offenbart ein digitales Fernrohr mit einem Bildprozessor zur Korrektur von Verzeichnungen. Eine Kontrolleinheit aktiviert die Korrektur von Verzeichnungen.

Der grundsätzliche Aufbau eines digitalen Fernrohres ist z.B. aus der Druckschrift DE 10 2013 217 240 A1 bekannt. In dieser Druckschrift wird eine Entfernungsmessvorrichtung mit einem Laserentfernungsmesser beschrieben, bei der eine Objektivlinse vorhanden ist, die das Bild eines entfernten Objektes auf einem Bildsensor erzeugt. Der Bildsensor ist mit einer Anzeige gekoppelt, die ein entsprechendes angezeigtes Bild erzeugt, das von einem Nutzer direkt oder unter Verwendung eines Okulars betrachtet werden kann.

Bei der Abbildung entfernter Objekte durch ein Objektiv und seine anschließende Betrachtung durch ein Okular entsteht als Bildfehler auch eine Verzeichnung, die üblicherweise durch optische Korrekturrechnungen beseitigt wird. Insbesondere beim Schwenken eines Fernrohres scheint dann im beobachteten Bild ein Globus mitzulaufen. Das Bild scheint über einen Globus bzw. eine Kugel zu laufen. Um diesen Globuseffekt zu korrigieren, muss eine gewisse Verzeichnung in Kauf genommen werden, so dass Linien am Rand des Bildes gekrümmt erscheinen.

Der Globuseffekt ist an sich aus der Beobachtung mit analogen Fernrohren bekannt. Er ist begründet in der menschlichen Wahrnehmung über das Auge mit einer gekrümmten Netzhaut und ist in seinem Ausmaß individuell unterschiedlich. Es besteht eine Abhängigkeit vom objektiven Sehwinkel $\alpha$, unter dem das Objektiv auf das Zentrum des Objektfeldes gerichtet ist, dem subjektiven Sehwinkel $\alpha'$, unter dem das menschliche Auge über das Okular auf das vom Objektiv erzeugte Bildfeld am Display sieht, von der Vergrößerung $\Gamma$ des Fernrohres und einem Verzeichnungsparameter $0 < k <= 1$. Verzeichnungsparameter sind an sich bekannt und werden beispielsweis im Stand der Technik "Holger Merlitz, Distortion of binoculars revisited: Does the sweet spot exist?, J. Opt. Soc. Am. A, 27, 50 (2010)" beschrieben.

Bekannte analoge Ferngläser werden daher üblicherweise entweder mit einer "Sollverzeichnung" ausgestattet, die den Globuseffekt vermeidet, oder sie werden mit einer geringen Verzeichnung versehen, die den Globuseffekt zumindest erträglich erscheinen lässt.

Der Erfindung lag die Aufgabe zugrunde, die Verzeichnungskorrektur einstellbar zu gestalten.

Diese Aufgabe wird bei einem digitalen Fernrohr oder digitalen Fernglas der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche.

Die Erfindung nutzt das Vorhandensein eines Bildprozessors zur visuellen Bilddarstellung auf dem Display aus. In den Bildprozessor ist zur Verzeichnungskorrektur mindestens ein Rechenprogramm mit Verzeichnungs-Korrektur-Algorithmus integriert, das durch ein Aktivierungselement, vorzugsweise ein außen am Fernrohr angebrachtes Betätigungselement einschaltbar und/oder einstellbar ist. Auf diese Weise kann der Benutzer des Fernrohres die Verzeichnung immer seiner aktuellen Benutzung, d.h. Schwenken oder Beobachten in konstanter Richtung, anpassen. Er könnte die Anpassung auch nur einmalig oder selten gemäß seiner Vorliebe durchführen. Bei einer alternativen Ausführungsform ist das Aktivierungselement als Sensor ausgebildet, so dass beispielsweise ein Bewegungs- oder Beschleunigungssensor, eine automatische Einstellung des Rechenprogramms bewirkt. Auf diese Weise ist es möglich, dass Beobachtungsgerät in einer Standby-Funktion einsatzbereit zu halten, wobei ein Anheben durch den Benutzer die Verzeichnungkorrektur aktiviert. Ebenso ist es möglich, einen Drehschalter mit Regelfunktion zur stufenlosen oder diskreten Einstellung der Verzeichnungs-Korrektur vorzusehen, um das Beobachtungsgerät auf diese Weise vorteilhaft auf die individuellen Bedürfnisse des Benutzers einstellen oder vorab auf sogenannte Pre-Sets einstellen zu können.

Mit Hilfe eines Bewegungs- oder Beschleunigungssensors kann zwischen Schwenken und Beobachten in eine konstante Richtung unterschieden und damit die Verzeichnung automatisch korrigiert werden. Beim Beobachten in eine konstante Richtung wird eine geringe oder gar keine Verzeichnung eingestellt. Schwenkt der Beobachter das Fernglas, scannt er z.B. eine Bergkette ab, dann kann die Verzeichnung kontinuierlich so eingestellt werden, bis kein Globuseffekt auftritt.

Handelt es sich um ein binokulares Fernrohr oder sind zumindest zwei Okulare bzw. zwei elektronische Viewfinder vorhanden, dann muss über den Bildprozessor sichergestellt werden, dass in beiden Vorrichtungen immer die gleiche Verzeichnung eingestellt ist.

Sowohl für die manuelle Einstellung als auch für die automatische Anpassung kann für mehrere Benutzer jeweils ein Profil mit den jeweiligen Vorlieben in der Verzeichnungseinstellung im Bildprozessor angelegt werden, welches beim Benutzerwechsel schnell über einen zusätzlichen Schalter oder ein anderes Bedienelement aufgerufen werden kann. Der Aufruf des Profils kann entweder manuell oder automatisch, z.B. durch einen Fingerprintsensor oder einen Augensensor erfolgen.

Werden Bilder des Kameramoduls auf ein im Fernrohr eingebautes Speichermedium (z.B. SD-Karte) abgespeichert, dann können die Informationen zur eingestellten Verzeichnung mit den Rohdaten abgespeichert oder auch in den JPG-Daten verrechnet werden. Werden Videos aufgezeichnet, dann können die Verzeichnungseinstellungen wahlweise mit benutzt oder aufgenommen werden.

Die erfindungsgemäße Verzeichnungskorrektur kommt vorteilhaft bei einem digitalen binokularen Fernglas zur Anwendung. Über eine drahtlose Kommunikationsschnittstelle, wie z.B. Wireless-LAN, Bluetooth oder Nearfield Communication können Einstellungen mit einem tragbaren Mobilgerät wie z.B. Smartphone übertragen und vorgenommen werden und Bilder oder Videos abgerufen werden.

Ausführungsbeispiele werden in der Zeichnung schematisch dargestellt und nachfolgend beschrieben. Dabei zeigen

Fig.1 ein digitales Fernrohr mit Schalter,
Fig.2 ein digitales Fernrohr mit Schalter und Bewegungssensor und
Fig.3 eine Graphik mit Kurven für unterschiedliche Verzeichnungsparameter k.

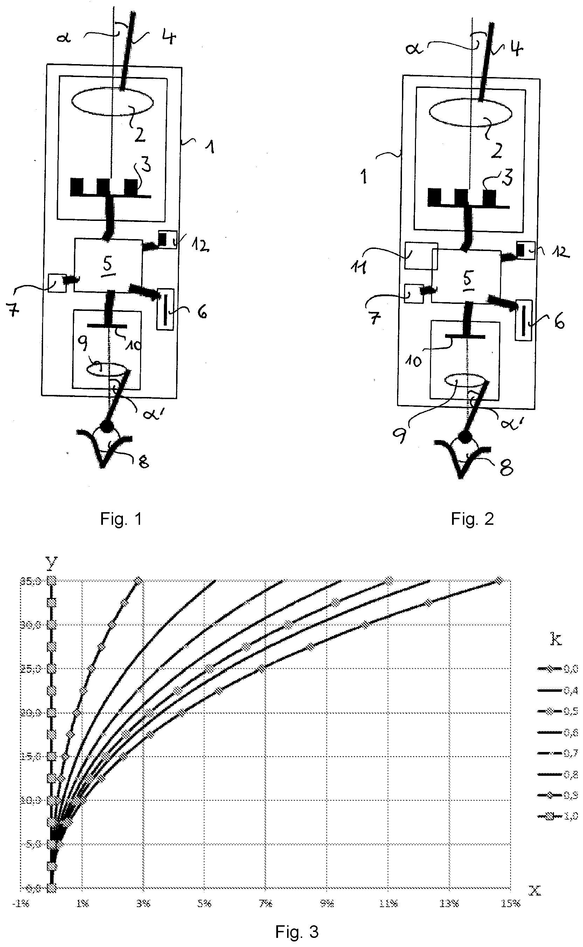

Die in den Figuren 1 und 2 dargestellten Ferngläser sind monokular in der Seitenansicht dargestellt. Die optischen und elektronischen Elemente sind jeweils in ein Gehäuse 1 eingebaut.

In einem vorderen Modul sind ein Objektiv 2 mit der Brennweite $f_{Obj}$ und ein Bildsensor 3 enthalten. Das Objektiv 2 nimmt die Abbildungsstrahlen 4 aus dem Objektraum unter dem objektiven Sehwinkel $\alpha$ auf und bildet sie auf den Bildsensor 3 ab.

Die vom Bildsensor 3 aufgenommenen Signale werden an einen Bildprozessor 5 weitergeleitet. Unterschiedliche Funktionsweisen des Bildprozessors 5 können durch ein von außen am Gehäuse 1 zugängliches Betätigungselement 6 eingeschaltet werden.

Dem Prozessor 5 ist eine ebenfalls von außen zugängliche Energieversorgung 7 zugeordnet. Dabei kann es sich z.B. um ein verschließbares Batteriefach handeln.

An dem dem Beobachter mit Auge 8 zugewandten Ende des Gehäuses 1 sind ein Okular 9 mit der Brennweite $f_{Oku}$ und Display 10 mit einer Bildhöhe $y_{Display}$ angeordnet. Das Display 10 wird vom Auge 8 unter einem subjektiven Sehwinkel $\alpha'$ beobachtet.

Bei der Anordnung nach Figur 2 ist dem Bildprozessor 5 noch ein Bewegungssensor 11 zugeordnet. Mit Hilfe der Signale des Bewegungssensors 11 können unterschiedliche Verzeichnungskorrekturen automatisch der aktuellen Handhabung der Ferngläser angepasst werden.

Dem Bildprozessor 5 ist eine Bildspeicherkarte (SD-Karte) 12 zugeordnet.

Die Verzeichnung kann allgemein abhängig von dem objektiven Sehwinkel $\alpha$, dem Verzeichnungsparameter k und der Vergrößerung $\Gamma$ durch folgende Beziehung dargestellt werden:

$$Verz(\alpha, k, \Gamma) = \frac{\tan\left(\frac{\arctan(\Gamma * \tan(k * \alpha))}{k}\right)}{\Gamma * \tan(\alpha)} - 1$$

wobei sich die Vergrößerung des digitalen Fernrohrs $\Gamma$ aus

$$\Gamma = \frac{f_{obj}}{f_{Oku}} * \frac{d_{Display}}{d_{Sensor}}$$

ergibt, wobei $d_{Display}$ der Diagonalen des Displays und $d_{Sensor}$ der Diagonalen des Sensors entspricht.

In guter Näherung, aber nicht erfindungsgemäß, ist die Verzeichnung nur abhängig vom subjektiven Sehwinkel $\alpha'$ und dem Verzeichnungsparameter k, nicht von der Vergrößerung $\Gamma$.

$$Verz(\alpha', k) = \frac{k * \tan(\alpha')}{\tan(k * \arctan(\tan(\alpha')))} - 1$$

Für ein Okular, mit welchem man das Bild eines digitalen Displays beobachtet, kann man die Verzeichnung in sehr guter Näherung, aber nicht erfindungsgemäß, abhängig von der Brennweite des Okulars $f_{Oku}$, der Bildhöhe auf dem Display $y_{Display}$ sowie dem Verzeichnungsparameter k berechnen.

$$Verz(f_{Oku}, y_{Display}, k) = \frac{k * \frac{y_{Display}}{f_{Oku}}}{\tan\left(k * \arctan\left(\frac{y_{Display}}{f_{Oku}}\right)\right)} - 1$$

Ein nichtkorrigierter Bildpunkt auf dem Display im Abstand $r_0$ von der Displaymitte wird erfindungsgemäß mit der Verzeichnungskorrektur *Verz* im Abstand r = $r_0$ * (1 + *Verz)* von der Displaymitte auf dem Display dargestellt.

In der Praxis wird man einige der Kurven für k (z.B. für 0.0, 0.25, 0.5, 0.75 und 1.0) im Speicher des Prozessors 5 als Wertetabelle hinterlegen und bei Bedarf über den Prozessor 5 abrufen und das Bild auf dem Display 10 mit der berechneten Verzeichnung anzeigen.

Alternativ, aber nicht erfindungsgemäß, kann die Verzeichnung aber auch näherungsweise als einfache Funktion von k und $\frac{y_{Display}}{f_{Oku}}$ dargestellt werden und berechnet sich dann, z.B. mit

$$Verz(f_{Oku}, y_{Display}, k) = coeff * (1 - k^2) * \left(\frac{y_{Display}}{f_{Oku}}\right)^2$$

Beispielsweise ist diese Beziehung mit *coeff* = 0.29 hinreichend genau bis $\frac{y_{Display}}{f_{Oku}} = 0.7$ , welches einem halben subjektiven Sehwinkel des Okulars von $\alpha$' von 35° entspricht. Auf diese Weise ergibt sich insgesamt ein subjektiver Sehwinkel (2*$\alpha$') von 70°.

Die auf dem Display 10 eingestellte Verzeichnung sollte sich immer über das ganze Bildfeld erstrecken und jeweils an der ganzen ausgewählten Kurve orientieren, um unnatürliche Verläufe zu vermeiden.

Die Verzeichnung der Objektivoptik kann bereits in dem dem Sensor 3 zugeordneten Prozessor 5 korrigiert werden. Ist das nicht der Fall, dann muss sie mit der oben beschriebenen Verzeichnungsregelung so verrechnet werden, dass das auf dem Display 10 angezeigte Bild die geforderte Verzeichnung aufweist.

Auch die Verzeichnung der Okularoptik muss mit der oben beschriebenen Verzeichnungsregelung so verrechnet werden, dass das auf dem Display 10 angezeigte Bild dem Beobachter mit der geforderten Verzeichnung erscheint. Eine hinterlegte Tabelle oder die Näherungsfunktion für die Verzeichnungssteuerung werden dann entsprechend angepasst.

Ist die Brennweite des Objektivs 2 zoombar und damit die Vergrößerung des Gerätes veränderbar, so betrifft es die oben beschriebene Verzeichnungsregelung an sich nicht, da sie unabhängig ist von der Vergrößerung. Lediglich eine mit dem Zoom einhergehende Änderung der Verzeichnung der Objektivoptik wird berücksichtigt.

Anders ist es, wenn die Brennweite des Okulars 9 zoombar und damit die Vergrößerung des Gerätes veränderbar ist. Da die Verzeichnungskorrektur abhängig ist von der Brennweite des Okulars 9, wird eine Veränderung z.B. über die elektronische Abtastung einer in der Zeichnung nicht weiter dargestellten mechanischen Steuerkurve und ihre Zuordnung zur eingestellten Brennweite berücksichtigt.

Da manche Beobachter auch beim Beobachten in eine konstante Richtung für einen natürlichen Seheindruck eine Verzeichnung bevorzugen, bietet es sich an, zwei Werte für den Verzeichnungsparameter k vorzugeben, einen für das Beobachten in eine konstante Richtung und einen für das Beobachten beim Schwenken. Es steht dem Benutzer auch frei, beide Werte gleich einzustellen.

Die in Fig.3 dargestellte Grafik zeigt beispielhaft Kurven für k = 0.0001 bis 1.0 dargestellt, wobei auf der X-Achse die Verzeichnung in % und auf der Y-Achse die Werte für $\arctan\left(\frac{y_{Display}}{f_{Oku}}\right)$ dargestellt sind. Am rechten Rand der Graphik sind die Krümmungsparameter für k=0,0 (oben) bis 1,0 (unten) angegeben. k=1,0 entspricht einem Kurvenverlauf entlang der y-Achse. Für kleinere Werte k gegen 0 ergeben sich Kurven, die sich ausgehend vom Koordinatenursprung bei einem Wert von 35 auf der y-Achse immer stärker in Richtung des 15% Wertes auf der x-Achse krümmen.

Diese oben beschriebene Steuerungsmöglichkeit ist ebenfalls interessant für weitere Geräte mit einem elektronischem View Finder (EVF), z.B. für nicht erfindungsgemäße Endoskope und für nicht erfindungsgemäße Mikroskope. Bei Endoskopen wird häufig beim Bewegen z.B. durch ein Organ hindurch beobachtet. Dabei ist es hilfreich, den Globuseffekt zu vermeiden. Wenn bei einer Untersuchung Geometrien ausgemessen und berechnet werden, dann kann die Verzeichnung im verwendeten Messalgorithmus mit berücksichtigt werden. Auch bei Mikroskopen gibt es Anwendungen, bei denen ein Globuseffekt stört, z.B. beim Abscannen einer Probe.

**Bezugszeichenliste**

1 Gehäuse

2 Objektiv

3 Bildsensor

4 Abbildungsstrahlen Objektiv

5 Bildprozessor

6 Betätigungselement

7 Energieversorgung

8 Auge

9 Okular

10 Display

11 Bewegungssensor

12 Bildspeicherkarte

α halber objektiver Sehwinkel

α' halber subjektiver Sehwinkel

Γ Fernrohrvergrößerung

k Verzeichnungsparameter

**Patentansprüche**

1. Digitales Fernrohr mit mindestens einem Kamera-Modul, bestehend aus einem Gehäuse (1), einem Objektiv (2) mit objektivem Sehwinkel α, unter dem das Objektiv mit Brennweite $f_{Obj}$ auf das Zentrum eines Objektfeldes gerichtet ist und einem Bild-Sensor (3) mit Bilddiagonale $d_{Sensor}$ und mindestens einem elektronischen Viewfinder, bestehend aus einem Okular (9) mit Brennweite $f_{Oku}$ , einem Bildprozessor (5), einem Aktivierungselement (6), einer Energieversorgung (7) und einem elektronischen Display (10) mit Bilddiagonale $d_{Display}$ und einem subjektivem Sehwinkel α', unter dem das menschliche Auge (8) über das Okular (9) auf ein vom Objektiv (2) erzeugtes Bild am Display (10) sieht **dadurch gekennzeichnet, dass**

- sich die Vergrößerung des digitalen Beobachtungsgeräts Γ aus $\frac{f_{Obj}}{f_{Oku}} * \frac{d_{Display}}{d_{Sensor}}$ ergibt,

- der Bildprozessor (5) zur einstellbaren Verzeichnungskorrektur des auf dem Display (10) erzeugten Bildes mindestens ein Rechenprogramm mit Verzeichnungs-Korrektur-Algorithmen enthält
- das Rechenprogramm über das Aktivierungselement (6) einschaltbar ist und
- eine Verzeichnung

$$Verz(\alpha, k, \Gamma) = \frac{\tan\left(\frac{\arctan(\Gamma * \tan(k * \alpha))}{k}\right)}{\Gamma * \tan(\alpha)} - 1$$

mit einem Verzeichnungsparameter 0 < k <= 1 gebildet ist.

2. Digitales Fernrohr nach Anspruch 1, **dadurch gekennzeichnet, dass** das mindestens eine Rechenprogramm über das Aktivierungselement (6) stufenlos einstellbar ist.

3. Digitales Fernrohr nach Anspruch 1, **dadurch gekennzeichnet, dass** das mindestens eine Rechenprogramm über das Aktivierungselement (6) in diskreten Stufen einstellbar ist.

4. Digitales Fernrohr nach einem der vorhergehenden Ansprüche, **dadurch gekennzeichnet, dass** das mindestens eine Rechenprogramm über das Aktivierungselement (6) manuell einstellbar ist, wobei dieses als Betätigungselement (6) außen an dem Gehäuse (1) angebracht ist.

5. Digitales Fernrohr nach einem der Ansprüche 1 bis 3, **dadurch gekennzeichnet, dass** das digitale Fernrohr dazu eingerichtet ist, eine automatische Einstellung des mindestens einen Rechenprogramms zu bewirken.

6. Digitales Fernrohr nach Anspruch 5, **dadurch gekennzeichnet, dass** das digitale Fernrohr einen Bewegungssensor (11), der an den Bildprozessor (5) angeschlossen ist, aufweist und dazu eingerichtet ist die automatische Einstellung anhand von Signalen des Bewegungssensors (11) auszuführen.

7. Digitales Fernrohr nach einem der vorhergehenden Ansprüche, **dadurch gekennzeichnet, dass** das digitale Fernrohr eine Bildspeicherkarte (12) aufweist, die an den Bildprozessor (5) angeschlossen ist, und die jeweils eingestellte Verzeichnungskorrektur separat auf der Bildspeicherkarte (12) abspeicherbar ist.

8. Digitales Fernrohr nach einem der vorherigen Ansprüche, **dadurch gekennzeichnet, dass** es ein digitales binokulares Fernglas ist.

9. Digitales Fernrohr nach Anspruch 8, **dadurch gekennzeichnet dass** die Verzeichnungskorrektur in den beiden Fernrohreinblicken gleich ist.

## Claims

1. Digital telescope having at least one camera module, consisting of a housing (1), a lens (2) with an objective visual angle $\alpha$, within which the lens with focal length $f_{Obj}$ is directed to the centre of an object field, and an image sensor (3) with an image diagonal $d_{Sensor}$ and at least one electronic viewfinder, consisting of an eyepiece (9) with focal length $f_{Oku}$, an image processor (5), an activation element (6), a power supply (7) and an electronic display (10) with an image diagonal $d_{Display}$ and a subjective visual angle $\alpha'$, within which the human eye (8) sees a picture, which was generated by the lens (2), on the display (10) by way of the eyepiece (9), **characterized in that**

   - the magnification of the digital observation device $\Gamma$ emerges according to $\dfrac{f_{Obj}}{f_{Oku}} * \dfrac{d_{Display}}{d_{Sensor}}$,

   - the image processor (5) contains at least one computing program with distortion correction algorithms for the adjustable distortion correction of the image generated on the display (10),
   - the computing program can be switched on by way of the activation element (6) and

   - a distortion $Verz(\alpha, k, \Gamma) = \dfrac{\tan\left(\frac{\arctan(\Gamma * \tan(k * \alpha))}{k}\right)}{\Gamma * \tan(\alpha)} - 1$ is formed with a distortion parameter 0 < k <= 1.

2. Digital telescope according to Claim 1, **characterized in that** the at least one computing program is continuously adjustable by way of the activation element (6).

3. Digital telescope according to Claim 1, **characterized in that** the at least one computing program is adjustable in discrete steps by way of the activation element (6).

4. Digital telescope according to any of the preceding claims, **characterized in that** the at least one computing program is manually adjustable by way of the activation element (6), with the latter being attached to the outside of the housing (1) as an actuating element (6).

**5.** Digital telescope according to any of Claims 1 to 3, **characterized in that** the digital telescope is configured to effect an automated adjustment of the at least one computing program.

**6.** Digital telescope according to Claim 5, **characterized in that** the digital telescope comprises a motion sensor (11), which is connected to the image processor (5), and is configured to perform the automated adjustment on the basis of signals of the motion sensor (11).

**7.** Digital telescope according to any of the preceding claims, **characterized in that** the digital telescope comprises an image memory card (12), which is connected to the image processor (5), and the respective distortion correction set can be stored separately on the image memory card (12).

**8.** Digital telescope according to any of the preceding claims, **characterized in that** it is a digital binocular field glass.

**9.** Digital telescope according to Claim 8, **characterized in that** the distortion correction is the same in both telescope eye lenses.

**Revendications**

**1.** Télescope numérique comprenant au moins un module de caméra constitué d'un boîtier (1), d'un objectif (2) ayant angle de vision objectif $\alpha$ sous lequel l'objectif, ayant une distance focale $f_{Obj}$, est dirigé vers le centre d'un champ objet, et d'un capteur d'image (3) ayant une diagonale $d_{Sensor}$, et au moins un viseur électronique, constitué d'un oculaire (9) ayant une distance focale $f_{Oku}$, d'un processeur d'image (5), d'un élément d'activation (6), d'une alimentation en énergie (7) et d'un écran électronique (10) ayant une diagonale d'image $d_{Display}$ et un angle de vision subjectif $\alpha$', sous lequel l'œil humain (8) voit, par l'intermédiaire de l'oculaire (9), une image générée par l'objectif (2) sur l'écran (10), **caractérisé en ce que**

- le grossissement $\Gamma$ de l'appareil d'observation numérique est donné par $\dfrac{f_{Obj}}{f_{Oku}} * \dfrac{d_{Display}}{d_{Sensor}}$ :

- le processeur d'image (5) contient, pour la correction réglable de la distorsion de l'image générée sur l'écran (10), au moins un programme de calcul comportant des algorithmes de correction de distorsion,
- le programme de calcul peut être activé par l'intermédiaire de l'élément d'activation (6), et

- une distorsion $Verz(\alpha, k, \Gamma) = \dfrac{\tan\left(\frac{\arctan(\Gamma*\tan(k*\alpha))}{k}\right)}{\Gamma*\tan(\alpha)} - 1$ avec un paramètre de distorsion $0 < k <= 1$.

**2.** Télescope numérique selon la revendication 1, **caractérisé en ce que** l'au moins un programme de calcul peut être réglé de manière continue par l'intermédiaire de l'élément d'activation (6).

**3.** Télescope numérique selon la revendication 1, **caractérisé en ce que** l'au moins un programme de calcul est réglable par étapes discrètes par l'intermédiaire de l'élément d'activation (6).

**4.** Télescope numérique selon l'une quelconque des revendications précédentes, **caractérisé en ce que** l'au moins un programme de calcul peut être réglé manuellement par l'intermédiaire de l'élément d'activation (6), lequel est monté à l'extérieur du boîtier (1) en tant qu'élément d'actionnement (6).

**5.** Télescope numérique selon l'une quelconque des revendications 1 à 3, **caractérisé en ce que** le télescope numérique est conçu pour effectuer un réglage automatique de l'au moins un programme de calcul.

**6.** Télescope numérique selon la revendication 5, **caractérisé en ce que** le télescope numérique comporte un capteur de mouvement (11) connecté au processeur d'image (5) et est conçu pour effectuer le réglage automatique à l'aide des signaux du capteur de mouvement (11).

**7.** Télescope numérique selon l'une quelconque des revendications précédentes, **caractérisé en ce que** le télescope numérique comporte une carte mémoire d'image (12) connectée au processeur d'image (5), et **en ce que** la correction de distorsion réglée peut être sauvegardée séparément sur la carte mémoire d'image (12).

**8.** Télescope numérique selon l'une quelconque des revendications précédentes, **caractérisé en ce qu'**il s'agit d'une paire de jumelles binoculaires numériques.

9. Télescope numérique selon la revendication 8, **caractérisé en ce que** la correction de distorsion est identique dans les deux oculaires du télescope.

Fig. 1

Fig. 2

Fig. 3

**IN DER BESCHREIBUNG AUFGEFÜHRTE DOKUMENTE**

**In der Beschreibung aufgeführte Patentdokumente**

- US 20160112646 A1
- US 20090179824 A1
- DE 102013217240 A1

**In der Beschreibung aufgeführte Nicht-Patentliteratur**

- Holger Merlitz, Distortion of binoculars revisited: Does the sweet spot exist. *J. Opt. Soc. Am. A*, 2010, vol. 27, 50